(19) Europäisches Patentamt
European Patent Office
Office européen des brevets

(11) **EP 4 787 698 A1**

(12) **EUROPEAN PATENT APPLICATION**
published in accordance with Art. 153(4) EPC

(43) Date of publication:
**05.08.2026 Bulletin 2026/32**

(21) Application number: 23954003.2

(22) Date of filing: **05.12.2023**

(51) International Patent Classification (IPC):
**H02M 3/335** (2006.01)

(52) Cooperative Patent Classification (CPC):
**C25B 1/04; C25B 9/65; H02J 3/28; H02J 3/38;
H02J 15/00; H02M 3/335; H02M 7/5387;
Y02P 20/133**

(86) International application number:
**PCT/CN2023/136588**

(87) International publication number:
**WO 2025/065870 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2023 CN 202311279554**

(71) Applicants:
• **China Energy Investment Corporation Limited
Beijing 100011 (CN)**

• **National Institute of Clean-and-Low-Carbon
Energy
Beijing 102211 (CN)**

(72) Inventors:
• **ZHOU, You
Beijing 102211 (CN)**
• **WANG, Honggang
Beijing 102211 (CN)**
• **TIAN, Mofan
Beijing 102211 (CN)**

(74) Representative: **Kador & Partner Part mbB
Corneliusstraße 15
80469 München (DE)**

(54) **ISOLATION CIRCUIT FOR HYDROGEN PRODUCTION SYSTEM AND RENEWABLE ENERGY HYDROGEN PRODUCTION SYSTEM COMPRISING SAME**

(57)    Provided in the present application are an isolation circuit for a hydrogen production system and a renewable energy hydrogen production system comprising same. The isolation circuit includes at least one direct-current conversion module and at least one DC-AC converter. The direct-current conversion module comprises a single-output port and a multi-output port, the single output port of the direct-current conversion module being in coupled connection with the DC side of the DC-AC converter, the multi-output port of the direct-current conversion module being in coupled connection with a plurality of external unidirectional power flow units and/or bidirectional power flow units, and each unidirectional power flow unit at least comprising a hydrogen production unit. The AC side of each DC-AC converter is in series coupled connection with an external alternating-current power grid or direct-current power grid. The present solution simultaneously satisfies application requirements of two coupling scenarios, effectively integrates various types of external units, and combines all components in systems into one, thus facilitating positioning of faults and repair while reducing costs.

FIG. 1

# EP 4 787 698 A1

**Description**

This application claims priority to Chinese Patent Application No. 202311279554.5, filed with the China National Intellectual Property Administration on September 28, 2023, entitled "ISOLATION CIRCUIT FOR HYDROGEN PRODUCTION SYSTEM AND RENEWABLE ENERGY HYDROGEN PRODUCTION SYSTEM COMPRISING SAME", the entire content of which is incorporated herein by reference.

TECHNICAL FIELD

The present invention relates to the technical field of hydrogen preparation technologies, and more particularly, to an isolation circuit for a hydrogen production system and a renewable energy hydrogen production system including the same.

BACKGROUND OF THE INVENTION

At present, system designs for renewable energy hydrogen production may all be categorized as either alternating-current coupling or direct-current coupling. Regardless of the alternating-current coupling mode or direct-current coupling mode, devices or units with different functions in the system are designed separately, and different devices and units are basically irrelevant in terms of design, which not only leads to high cost in the design of the whole system, but also makes it difficult to expand the system. If a fault occurs in the system, fault positioning and repairing or restoration becomes highly challenging.

SUMMARY OF THE INVENTION

A technical problem to be solved by the present application is that in the existing renewable energy hydrogen production solution, the whole system cannot be designed due to the independent design of different devices or units, which leads to high cost, difficult expansion and difficult fault maintenance. To address this, the present application provides an isolation circuit for a hydrogen production system and a renewable energy hydrogen production system including same.

In a first aspect, a technical solution of the present application provides an isolation circuit for a hydrogen production system, including:

at least one direct-current conversion module, wherein the direct-current conversion module includes one single-output port and one multi-output port; and
at least one DC-AC converter;
the single-output port of the direct-current conversion module being coupled to a DC side of the DC-AC converter;
the multi-output port of the direct-current conversion module being coupled to a plurality of external unidirectional power flow units and/or bidirectional power flow units, and the unidirectional power flow unit at least including a hydrogen production unit; and
an AC side of the DC-AC converter being coupled in series to an external alternating-current power grid or direct-current power grid.

According to the isolation circuit for the hydrogen production system in some solutions, the unidirectional power flow unit includes a hybrid hydrogen production unit and/or a renewable energy power generation unit; and the hybrid hydrogen production unit includes two or more hydrogen production modules; and the bidirectional power flow unit includes an energy storage unit.

According to the isolation circuit for the hydrogen production system in some solutions, the plurality of unidirectional power flow units are coupled in parallel to the multi-output port.

According to the isolation circuit for the hydrogen production system in some solutions, when the direct-current conversion module is connected to the hybrid hydrogen production unit or the renewable energy power generation unit, the direct-current conversion module is configured with an isolation unit.

In a second aspect, a technical solution of the present application provides a renewable energy hydrogen production system, including at least one isolation circuit for the hydrogen production system according to the technical solution in the first aspect, and:

at least one renewable energy power generation unit, wherein each renewable energy power generation unit is coupled to one output port of the isolation circuit;
at least one energy storage unit, wherein the energy storage unit is coupled to one output port of the isolation circuit;

and

at least one hydrogen production unit, wherein the hydrogen production unit is coupled to one output port of the isolation circuit.

According to the renewable energy hydrogen production system in some solutions, when a plurality of renewable energy power generation units are provided, the plurality of renewable energy power generation units are coupled in parallel to the plurality of output ports of the isolation circuit.

According to the renewable energy hydrogen production system in some solutions, when a plurality of renewable energy power generation units are provided, the plurality of renewable energy power generation units are classified into a plurality of parallel coupling groups; and

the renewable energy power generation unit in each parallel coupling group is coupled in parallel to a parallel coupling port; and the parallel coupling ports in the plurality of parallel coupling groups are coupled in parallel to the plurality of output ports of the isolation circuit.

According to the renewable energy hydrogen production system in some solutions, when a plurality of hydrogen production units are provided, types of the hydrogen production unit include at least two types.

According to the renewable energy hydrogen production system in some solutions, the hydrogen production unit includes an alkaline hydrogen production module, a solid oxide hydrogen production module and a PEM hydrogen production module.

In a third aspect, a technical solution of the present application provides a control method for the renewable energy hydrogen production system as described in any one of the above, including:

determining a system operating mode according to a type of a unidirectional power flow unit and/or a bidirectional power flow unit external to the system;

when the system operating mode is a renewable energy based grid-connected mode: controlling a power path direction of the isolation circuit to implement a direction of power from a single type of renewable energy power generation unit to a unidirectional power flow unit of an alternating-current or direct-current bus;

when the system operating mode is an energy storage based grid-connected charging/discharging mode: controlling a power path direction of the isolation circuit to implement the direction of the power from a single type of energy storage unit to a bidirectional power flow unit of the alternating-current or direct-current bus; and

when the system operating mode is a grid-connected based hydrogen production mode: controlling a power path direction of the isolation circuit to implement the direction of the power from the alternating-current or direct-current bus to a single type of hydrogen production unit.

The control method for the renewable energy hydrogen production system in some solutions further includes:

when the system operating mode is a renewable energy hybrid grid-connected mode: controlling a power path direction of the isolation circuit to implement the direction of the power from multiple types of renewable energy power generation units to the unidirectional power flow unit of the alternating-current or direct-current bus;

when the system operating mode is an energy storage hybrid grid-connected charging/discharging mode: controlling a power path direction of the isolation circuit to implement the direction of the power from multiple types of energy storage units to the bidirectional power flow unit of the alternating-current or direct-current bus; and

when the system operating mode is a grid-connected hybrid hydrogen production mode: controlling a power path direction of the isolation circuit to implement the direction of the power from the alternating-current or direct-current bus to multiple types of hydrogen production units.

Compared with the prior art, the technical solutions of the present application have the following technical effects.

According to the isolation circuit for the hydrogen production system and the renewable energy hydrogen production system including same provided by the present application, the isolation circuit includes at least one direct-current conversion module and at least one DC-AC converter, and the direct-current conversion module includes one single-output port and one multi-output port; the single output port of the direct-current conversion module is coupled to the DC side of the DC-AC converter; the multi-output port of the direct-current conversion module is coupled to the plurality of external unidirectional power flow units and/or bidirectional power flow units, and each unidirectional power flow unit at least includes the hydrogen production unit; and the AC side of the DC-AC converter is coupled in series to the external alternating-current power grid or direct-current power grid. Therefore, the solution has reserved coupling ports for the external alternating-current power grid or direct-current power grid, which may be applied to both alternating-current coupling and direct-current coupling, and meet the application requirements of both coupling situations. In specific use, the port of the unidirectional power flow unit and/or the bidirectional power flow unit is directly connected to the output port of the isolation circuit, thus completing the coupling of the whole system. The solutions of the present application above may adopt a simple way to effectively integrate various types of external units and combine all components in the system into one, thus facilitating fault positioning and repairing while reducing costs.

DESCRIPTION OF THE DRAWINGS

The preferred embodiments of the present application will be described in detail below with reference to the drawings, which will help to understand the objects and advantages of the present application, wherein:

FIG. 1 is a schematic topological diagram of an isolation circuit for a hydrogen production system according to one embodiment of the present application;

FIG. 2 is a schematic topological diagram of an isolation circuit for a hydrogen production system according to another embodiment of the present application;

FIG. 3 is a schematic topological diagram of an isolation circuit for a hydrogen production system according to still another embodiment of the present application;

FIG. 4 is a structural block diagram of a renewable energy hydrogen production system according to one embodiment of the present application;

FIG. 5 is a structural block diagram of a renewable energy hydrogen production system according to another embodiment of the present application;

FIG. 6 is a structural block diagram of a renewable energy hydrogen production system according to another specific embodiment of the present application;

FIG. 7 is a schematic topological diagram of a DC/DC converter according to one embodiment of the present application;

FIG. 8 is a schematic topological diagram of an DC-AC converter according to one embodiment of the present application; and

FIG. 9 is a flow chart of a control method for the renewable energy hydrogen production system according to one embodiment of the present application.

DESCRIPTION OF EXEMPLARY EMBODIMENTS

The following clearly and completely describes the technical solutions in the embodiment of the present application with reference to the drawings. Apparently, the described embodiments are merely some but not all of the embodiments of the present application. Based on the embodiments of the present application, those of ordinary skills in the art may obtain all other embodiments without creative effort, which shall all fall within the scope of protection of the present application.

In the description of the present application, it should be noted that the orientation or positional relationship indicated by the terms "center", "upper", "lower", "left", "right", "vertical", "horizontal", "inner", "outer" and the like is based on the orientation or positional relationship shown in the drawings, only for the convenience of describing the present application and simplifying the description, and does not indicate or imply that the indicated device or element must have a specific orientation, or be constructed and operated in a specific orientation. Therefore, the terms should not be construed as limiting the present application. Furthermore, the terms "first", "second" and "third" are only used for descriptive purposes, and do not indicate or imply relative importance.

In the description of the present application, it should be noted that, unless otherwise specified and limited, terms such as "installation", "connected" and "connection", or the like, should be understood broadly, for example, the connection may be fixed connection, or detachable connection or integral connection; may be direct connection, may also be indirect connection through an intermediate medium, and may be communication inside two elements. The specific meaning of the above terms in the present application may be understood in a specific case by those of ordinary skills in the art.

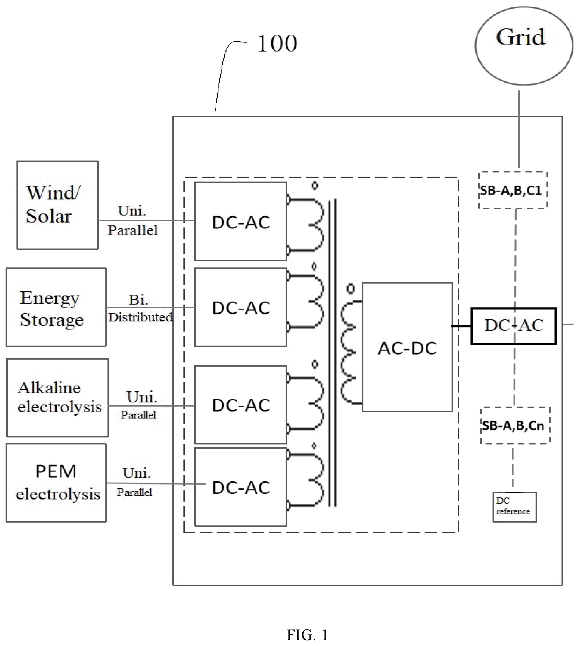

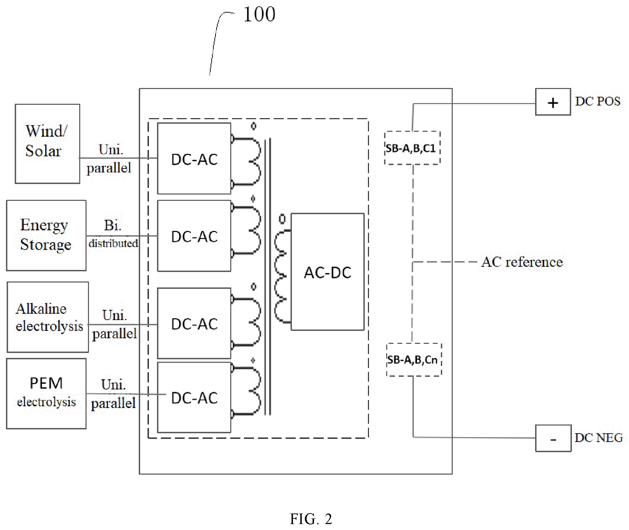

The embodiment provides an isolation circuit for a hydrogen production system, as shown in FIG. 1 to FIG. 3, including:

at least one direct-current conversion module and at least one DC-AC converter. As shown in a dotted box in the figure, the direct-current conversion module is formed by combining a plurality of internal DC-AC converters and one internal AC-DC converter, which includes one single output port and one multi-output port. The single output port of the direct-current conversion module is coupled to a DC side of the external DC-AC converter; the multi-output port of the direct-current conversion module is coupled to a plurality of external unidirectional power flow units and/or bidirectional power flow units, and the unidirectional power flow unit at least includes a hydrogen production unit. An AC side of the external DC-AC converter is coupled in series to an external alternating-current power grid or direct-current power grid.

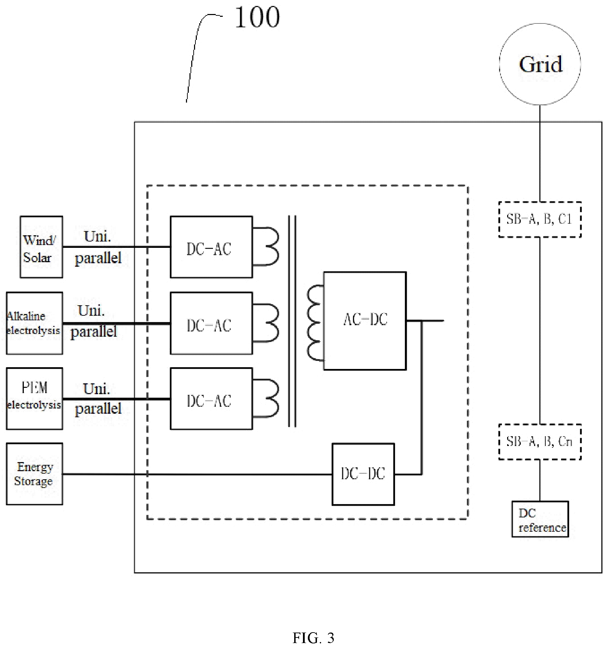

In FIG. 1 to FIG. 3, when the direct-current conversion module is externally connected to the renewable energy power generation unit or the hydrogen production unit, the direct-current conversion module may be a DC-DC conversion module with isolation function, that is, a combined structure including a DC-AC converter and an AC-DC converter is used. However, as shown in FIG. 3, when the direct-current conversion module is externally connected to the energy storage unit, a DC-DC converter with DC conversion function may be directly connected without adding an isolation function.

The isolation circuit provided in the above embodiment includes at least one direct-current conversion module and at least one DC-AC converter. The direct-current conversion module includes one single-output port and one multi-output port. The single output port of the direct-current conversion module is coupled to a DC side of the DC-AC converter; the multi-output port of the direct-current conversion module is coupled to a plurality of external unidirectional power flow units and/or bidirectional power flow units, and each unidirectional power flow unit at least includes a hydrogen production unit; and an AC side of the DC-AC converter is coupled in series to an external alternating-current power grid or direct-current power grid. Therefore, the solution has reserved coupling ports for the external alternating-current power grid or direct-current power grid, which may be applied to both alternating-current coupling and direct-current coupling, and meet the application requirements of both coupling situations. In specific use, the port of the unidirectional power flow unit and/or the bidirectional power flow unit is directly connected to the output port of the isolation circuit, thus completing the coupling of the whole system. The solution of the present application above may adopt a simple way to effectively integrate various types of external units and combine all components in the system into one, thus facilitating fault positioning and repairing while reducing costs.

In the solution above, the unidirectional power flow unit includes a hybrid hydrogen production unit and/or a renewable energy power generation unit; and the hybrid hydrogen production unit includes two or more hydrogen production modules; and the bidirectional power flow unit includes an energy storage unit. In specific implementation, quantities and types of the unidirectional power flow units and the bidirectional power flow units required may be configured according to actual application scenarios, and the plurality of unidirectional power flow units are coupled in parallel to the multi-output port.

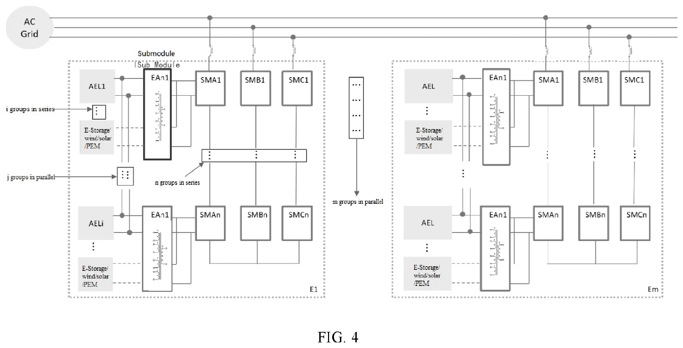

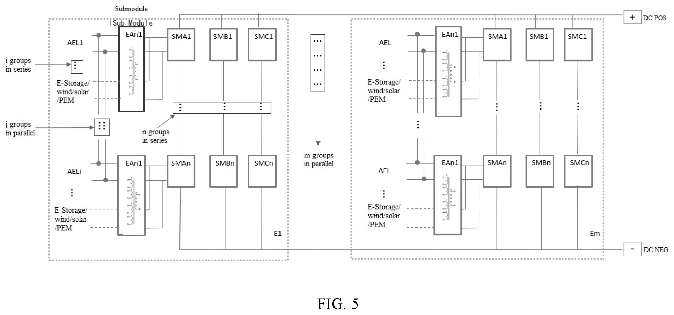

The embodiments of the present application further provide a renewable energy hydrogen production system, as shown in FIG. 4 and FIG. 5, including at least one isolation circuit for the hydrogen production system according to any one of the embodiments above and at least one renewable energy power generation unit, wherein each renewable energy power generation unit is coupled to one output port of the isolation circuit; at least one energy storage unit, wherein the energy storage unit is coupled to one output port of the isolation circuit; and at least one hydrogen production unit, wherein the hydrogen production unit is coupled to one output port of the isolation circuit.

Through the above solution, the isolation circuit can establish a hydrogen production system architecture that fully adapts to the fluctuation of renewable energy according to needs by accessing different functional units, and the renewable energy power generation unit is connected to the isolation circuit, and meanwhile, the isolation circuit is also connected to the hydrogen production unit and the energy storage unit. With this system, when the energy generated by the renewable energy power generation unit fluctuates, a power-type hydrogen production unit may be directly used for adjustment and compensation for short-term fluctuation according to a time scale of fluctuation, and an energy-type hydrogen production unit may be used for adjustment and compensation for long-term fluctuation. Through the power-type and energy-type storage units, self-regulation abilities of the power-type and energy-type hydrogen production units are compensated and optimized, so as to meet the dual requirements of steady-state energy balance and dynamic power tracking of the system in the whole process of hydrogen production by renewable energy power generation.

As shown in FIG. 4 and FIG. 5, the system architecture and topological structure of the renewable energy hydrogen production system mainly include four extensible levels.

(1) When a bottom-level submodule ISub Module is a multi-port high-frequency isolated DC-DC module, the multi-port side can be coupled to and expanded with a plurality of renewable energy power generation units, energy storage units and hydrogen production units, and a coupling mode of the submodule is to realize parallel connection of i groups of a plurality of energy units through the isolation circuit with isolation function above, wherein i may be expanded according to application requirements. Assuming the number of renewable energy power generation units is u, the number of energy storage units is v, and the number of electrolyzers in the hydrogen production units is w, i satisfies the following formula: i=u+v+w, wherein u, v and w can all be expanded as needed.

(2) When the bottom-level submodule ISub Module is a multi-port unidirectional flow energy device of the same type, and j groups of the submodules may be directly connected in parallel to meet scale requirements, wherein j may be extended according to application requirements.

(3) When a middle-level submodule Sub Module, that is, the external DC-AC converter, is a non-isolated DC-AC module, a single-port direct-current side of the bottom-level submodule ISub Module is connected to a DC side of the middle level submodule Sub Module (DC-AC converter), and an AC side of the middle-level submodule Sub Module may be connected to an alternating-current bus coupling end after n groups of series connection (or connected with a direct-current bus coupling end based on MMC connection mode), wherein n may be expanded according to application requirements.

(4) The middle-level submodules Sub Module are connected in series to form an upper-level cascade system, and the upper-level cascade system has two implementations: alternating-current connection structure or direct-current connection structure. An overall cascade architecture may be formed by m groups of upper cascade systems by connecting the alternating-current buses or direct-current buses in parallel, wherein m may be extended according to application requirements.

Due to the adoption of four extensible levels to form a large-scale architecture for renewable energy hydrogen production, the power distribution and optimization of different types of energy devices may be optimized and calculated according to the following maximum power distribution boundary.

a maximum generation power of the renewable energy power generation unit satisfies equation

$$P_{re} = 3n * m * \sum_{x=1}^{u} Px ;$$

a maximum charging and discharging power range of the energy storage unit satisfies equation

$$P_{ES} = 3n * m * \sum_{y=1}^{v} Py ; \text{ and}$$

a maximum power demand of the hydrogen production unit satisfies equation $P_{EL} = 3n * m * \sum_{z=1}^{w} Pz$ .

In the above equations, 3 represents three phases, n is the number of series-connected middle-level submodules, m is the number of parallel-connected upper-level cascaded systems, px represents a power of an $x^{th}$ renewable energy power generation unit, py represents a power of a $y^{th}$ energy storage unit, and pz represents a power of a $z^{th}$ hydrogen production unit.

Based on the above architecture, according to the type of the unidirectional power flow unit and/or the bidirectional power flow unit externally connected to the system, this solution proposes a two-level working mode optimization method, which includes a single combination mode and a hybrid combination mode, with the difference that the single combination mode mainly considers a single power flow path in one direction, while the hybrid combination mode mainly considers the combination of two power flow paths in two or more directions.

(1) A specific definition of the single combination mode is as follows.

1.1 When the system operating mode is a renewable energy based grid-connected mode: controlling a power path direction of the isolation circuit to implement a direction of power from a single type of renewable energy power generation unit to a unidirectional power flow unit of an alternating-current or direct-current bus.
1.2 When the system operating mode is an energy storage based grid-connected charging/discharging mode: a power path direction of the isolation circuit is controlled to implement the direction of the power from a single type of energy storage unit to a bidirectional power flow unit of the alternating-current or direct-current bus.
1.3 When the system operating mode is a grid-connected based hydrogen production mode: a power path direction of the isolation circuit is controlled to implement the direction of the power from the alternating-current or direct-current bus to a single type of hydrogen production unit.

(2) A specific definition of the hybrid combination mode is as follows.

2.1 When the system operating mode is a renewable energy hybrid grid-connected mode (Mrex): a power (Pmrex) path direction of the isolation circuit is controlled to implement the direction of the power from multiple types of renewable energy power generation units to the unidirectional power flow unit of the alternating-current or direct-current bus.
2.2 When the system operating mode is an energy storage hybrid grid-connected charging/discharging mode (Mesx1/Mesx2): a power (Pmesx1/Pmesx2) path direction of the isolation circuit is controlled to implement the direction of the power from multiple types of energy storage units to the bidirectional power flow unit of the alternating-current or direct-current bus.
2.3 When the system operating mode is a grid-connected hybrid hydrogen production mode (Melx): a power (Pmelx) path direction of the isolation circuit is controlled to implement the direction of the power from the alternating-current or direct-current bus to multiple types of hydrogen production units.

According to the above six combination modes, a basic application mode of the architecture is constructed, and comprehensive coverage of power flow control in all scenarios of the system may be realized by further repeatedly superimposing the above six combination modes. Typical implementation combinations are shown in Table 1.

Table 1 Examples of System Operating Mode Combinations

| Combination mode | Combination condition | Application scenario | Green hydrogen Index |
|---|---|---|---|
| Mrex+Mesx1 | Pmrex≦Pmesx1 | Renewable energy only charges the energy storage | Low |
| | Pmrex>Pmesx1 | Renewable energy charges the energy storage while supplying power to a grid bus | Low |
| Mrex+Melx | Pmrex≧Pmelx | The electrolyzer only receives power from renewable energy | Maximum |
| Mesx1+Melx | Pmesx1>0, Pmelx>0 | The energy storage and the electrolyzer only receive power from a grid | Medium |
| Mrex+Mesx1+M elx | Pmrex ≧ Pmesx1+Pmelx | The energy storage and the electrolyzer only receive power from renewable energy | Maximum |
| Mrex+Mesx2 | Prex>0, Pesx2>0 | Renewable energy and the energy storage only supply power to the grid bus | Low |
| Mesx2+Melx | Pmesx2≧Pmelx | The electrolyzer only receives power from the energy storage | Higher |
| Mrex+Mesx2+M elx | Pmrex+Pmesx2 ≧Pmelx | The electrolyzer only receives power from renewable energy and the energy storage | Very high |

As shown in Table 1, according to different operating modes, the green hydrogen index may be defined according to a utilization rate of the renewable energy in the hydrogen production process, which is used to determine an optimization principle of the hydrogen production process. The second mode combination and the fourth mode combination have the highest green hydrogen index, which belong to the highest priority hydrogen production mode. The green hydrogen indexes of the sixth mode combination and the seventh mode are higher and very high respectively, the determining factors of which mainly depend on whether electric quantities of the stored energy are all from the renewable energy. The green hydrogen index of the third mode combination is medium, the determining factor of which depends on whether electric quantities of the power grid are from the renewable energy. The green hydrogen indexes are low in the two scenarios in the first mode combination, which mainly provide auxiliary support such as stability for the hydrogen production process.

In this solution, the extended design of multi-port high-frequency isolation is adopted, and other types of energy units excluding the electrolytic cell of the hydrogen production unit, such as energy storage unit and renewable energy power generation unit, may be connected at the same time. Therefore, renewable energy with more direct coupling may be provided for the hydrogen production in the electrolytic cell, and the smoothness and stability are controlled through the stored energy. In addition, multi-port isolation also makes it possible for different hydrogen production units to cooperate. For example, by connecting alkaline electrolytic cell and PEM electrolytic cell at the same time, the complementary characteristics of the two hydrogen production devices may be fully used to establish hybrid hydrogen production mode and control with better cost performance. Moreover, the bottom-level submodule ISub Module may be extended in parallel between the same type of unidirectional flow energy devices, so that large-capacity alkaline electrolytic cells of different grades may be integrated. For example, for an alkaline electrolytic cell with tens of thousands of amperes, a working current of the bottom-level submodule ISub Module may be made more reasonable by reasonably selecting a value of j, so as to optimize the design of the bottom-level submodule ISub Module and improve the cost performance of the system.

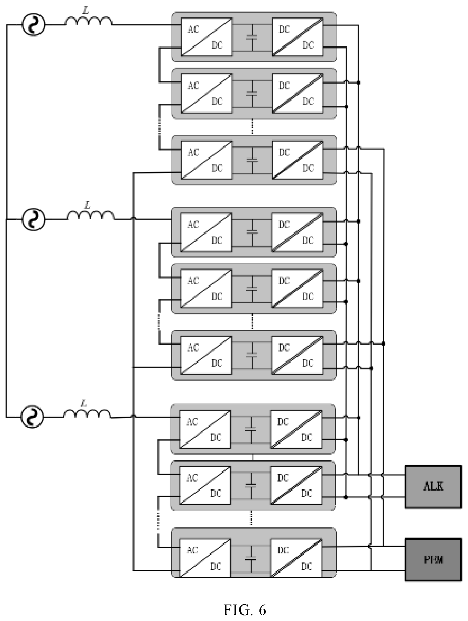

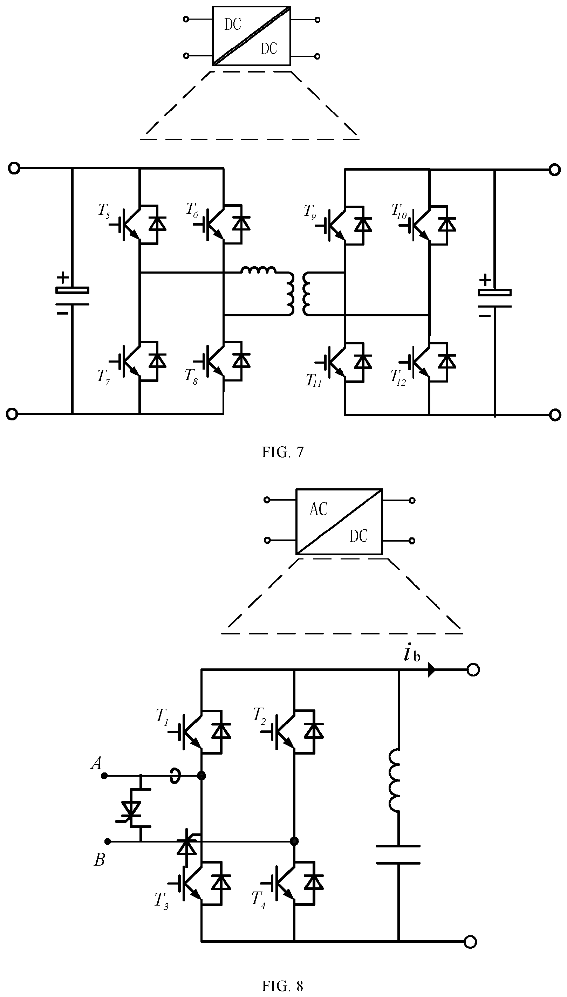

FIGs. 6-8 show a specific embodiment of a hybrid hydrogen production system for an alternating-current power grid. As shown in FIG. 6, the isolation circuit is served as the bottom-level submodule ISub Module. The bottom-level submodule ISub Module is composed of an isolated DC-DC converter with single-ended output, and a circuit topology of the bottom-level submodule is not limited to series resonance, phase-shifted full bridge, LLC, and the like. In the structure shown in FIG. 6, the number of the renewable energy power generation unit is zero, the number of the energy storage unit is zero, and the number of the hydrogen production units is two. Moreover, because the hydrogen production unit belongs to a unidirectional flow type energy device, the architecture shown in FIG. 6 may realize direct parallel connection of j groups to meet the scale requirements. In practice, in the embodiment, 150 modules (3 phases) and 60 modules are respectively connected in parallel to the alkaline hydrogen production module and the PEM hydrogen production module. FIG. 7 shows an implementation of each DC-DC converter in FIG. 6, and FIG. 8 shows an implementation of the DC-AC converter in FIG. 6 (the DC side is connected to the DC-DC converter, and the AC side is connected to the power grid through an inductor). The DC-AC converter connected with the bottom-level submodule ISub Module is used as a middle-level DC-AC module, the middle-level DC-AC module is an H-bridge circuit, and the hydrogen production unit includes an alkaline hydrogen production unit ALK and a PEM hydrogen production unit. Assuming that a grid voltage is 35 kV, a gain of the isolated DC/DC converter is 1, and a minimum operating voltage Udc_min of the hydrogen production unit is 500 V, it may be calculated that a minimum number of the middle-level submodules Sub Modules after each phase cascade is that N= 65.

$$\frac{N \times U_{dc\_min}}{\sqrt{2}} \geq \frac{U_s}{\sqrt{3}} \times k_v \times k_b \times k_L$$ ;

Us is a rated voltage of the power grid; $k_v$ is a correction coefficient under the condition of the maximum fluctuation of the grid voltage, which is 1.07; $k_b$ is a correction coefficient under the most serious voltage imbalance, which is 1.02; and $k_L$ is a correction coefficient under the maximum voltage drop of the grid-connected reactance, which is 1.1.

In order to improve the reliability of the system, 5% redundancy design is considered, and a total quantity of submodules in each phase of the system is set to 70. Since the power of the alkaline electrolytic cell is much higher than that of the PEM electrolytic cell and both are higher than the maximum bearing power of a single module, parallel connection may be made at an output end of the ISub Module, and a specific quantity of parallel connections should be determined according to a power ratio of an alkaline electrolysis system and a PEM electrolysis system. Assuming that the power ratio of the alkaline hydrogen production system to the PEM hydrogen production is 5:2, 50 ISub Modules in each phase should be connected in parallel to the alkaline hydrogen production system, and 20 ISub Modules should be connected in parallel to the PEM hydrogen production system. Since the phases of A, B and C are sequentially offset by 120°, connecting the three phases in parallel can further reduce a current ripple delivered to the electrolysis system.

Considering that a response speed of the PEM hydrogen production unit is much faster than that of the alkaline hydrogen production system, the power flowing into the alkaline system and the PEM hydrogen production system can be flexibly modulated by controlling the AC side voltage of the Sub Module, so as to quickly respond to and accurately track dispatching instructions of the power grid, that is, by controlling the voltage gain ratio of DC-DC in the bottom-level submodule, a current distribution ratio and a current change rate of the DC-DC can be controlled to meet the dynamic requirements of different hydrogen production units. The system architecture of the present application realizes high voltage by connecting different units in series without needing a step-down transformer, so the system architecture can help to improve the response speed. In addition, a cascade topology in the solution may be regarded as a plurality of small power supplies (AC-DC+DC-DC) connected in parallel to the hydrogen production unit. For the same converter topology, the smaller the power supply is, the smaller the inductance is; therefore, compared with a single large power supply, the solution has good dynamic characteristics. In the solution of the present application, the plurality of modules in A, B and C phases are connected in parallel, so that staggered parallel operation characteristics are naturally generated, and the ripple current can be further offset, thereby reducing the required filtering inductance value and improving the dynamic characteristics.

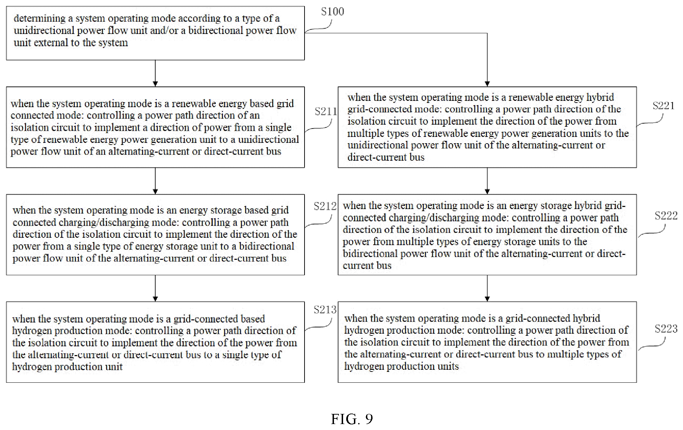

The embodiments of the present application further provide a control method for the renewable energy hydrogen production system as described in any one of the above, as shown in FIG. 9, including:

S100: determining a system operating mode according to a type of a unidirectional power flow unit and/or a bidirectional power flow unit external to the system;

S211: when the system operating mode is a renewable energy based grid-connected mode: controlling a power path direction of the isolation circuit to implement a direction of power from a single type of renewable energy power generation unit to a unidirectional power flow unit of an alternating-current or direct-current bus;

S212: when the system operating mode is an energy storage based grid-connected charging/discharging mode: controlling a power path direction of the isolation circuit to implement the direction of the power from a single type of energy storage unit to a bidirectional power flow unit of the alternating-current or direct-current bus;

S213: when the system operating mode is a grid-connected based hydrogen production mode: controlling a power path direction of the isolation circuit to implement the direction of the power from the alternating-current or direct-current bus to a single type of hydrogen production unit;

S221: when the system operating mode is a renewable energy hybrid grid-connected mode: controlling a power path direction of the isolation circuit to implement the direction of the power from multiple types of renewable energy power generation units to the unidirectional power flow unit of the alternating-current or direct-current bus;

S222: when the system operating mode is an energy storage hybrid grid-connected charging/discharging mode:

controlling a power path direction of the isolation circuit to implement the direction of the power from multiple types of energy storage units to the bidirectional power flow unit of the alternating-current or direct-current bus; and
S223: when the system operating mode is a grid-connected hybrid hydrogen production mode: controlling a power path direction of the isolation circuit to implement the direction of the power from the alternating-current or direct-current bus to multiple types of hydrogen production units.

Through the solutions of the present application above, the scale of the renewable energy hydrogen production process can be guaranteed, and at the same time, the requirements of alternating-current coupling or direct-current coupling in grid-connected and off-grid modes can be met. The energy flow paths and processes of different hydrogen production modes, renewable energy and energy storage are optimized by using the high-frequency isolation multi-port characteristics of the isolation circuit. The control method for the cascaded large-scale renewable energy hydrogen production system based on high-frequency isolated multi-port module may greatly improve the adaptability of the hydrogen production process to the fluctuation of renewable energy and the utilization level of devices, further optimize the standardized combination and modularized production of large-scale renewable energy hydrogen production structure, and reduce the customization, complexity and operation and maintenance cost of the system architecture and control, thus improving the reliability, safety and economy of the system.

Obviously, the above-mentioned embodiments are merely examples for clarity of illustration and are not intended to limit the modes of execution. For those of ordinary skills in the art, other different forms of changes or variations can be made on the basis of the above description. It is not necessary or possible to exhaust all the implementations here. Obvious changes or variations derived therefrom are still within the scope of protection of the present application.

## Claims

1. An isolation circuit for a hydrogen production system, comprising:

   at least one direct-current conversion module, wherein the direct-current conversion module comprises one single-output port and one multi-output port; and
   at least one DC-AC converter;
   the single-output port of the direct-current conversion module being coupled to a DC side of the DC-AC converter;
   the multi-output port of the direct-current conversion module being coupled to a plurality of external unidirectional power flow units and/or bidirectional power flow units, and the unidirectional power flow unit at least comprising a hydrogen production unit; and
   an AC side of the DC-AC converter being coupled in series to an external alternating-current power grid or direct-current power grid.

2. The isolation circuit for the hydrogen production system according to claim 1, wherein:

   the unidirectional power flow unit comprises a hybrid hydrogen production unit and/or a renewable energy power generation unit; and the hybrid hydrogen production unit comprises two or more hydrogen production modules; and
   the bidirectional power flow unit comprises an energy storage unit.

3. The isolation circuit for the hydrogen production system according to claim 2, wherein:
   the plurality of unidirectional power flow units are coupled in parallel to the multi-output port.

4. The isolation circuit for the hydrogen production system according to claim 2, wherein:
   when the direct-current conversion module is connected to the hybrid hydrogen production unit or the renewable energy power generation unit, the direct-current conversion module is configured with an isolation unit.

5. A renewable energy hydrogen production system, comprising at least one isolation circuit for a hydrogen production system according to any one of claims 1 to 4, and:

   at least one renewable energy power generation unit, wherein each renewable energy power generation unit is coupled to one output port of the isolation circuit;
   at least one energy storage unit, wherein the energy storage unit is coupled to one output port of the isolation circuit; and
   at least one hydrogen production unit, wherein the hydrogen production unit is coupled to one output port of the isolation circuit.

6. The renewable energy hydrogen production system according to claim 5, wherein:
when a plurality of renewable energy power generation units are provided, the plurality of renewable energy power generation units are coupled in parallel to the plurality of output ports of the isolation circuit.

7. The renewable energy hydrogen production system according to claim 5, wherein:

   when a plurality of renewable energy power generation units are provided, the plurality of renewable energy power generation units are classified into a plurality of parallel coupling groups; and
   the renewable energy power generation unit in each parallel coupling group is coupled in parallel to a parallel coupling port; and the parallel coupling ports in the plurality of parallel coupling groups are coupled in parallel to the plurality of output ports of the isolation circuit.

8. The renewable energy hydrogen production system according to claim 5, wherein:
when a plurality of hydrogen production units are provided, types of the hydrogen production unit comprise at least two types.

9. The renewable energy hydrogen production system according to claim 8, wherein:
the hydrogen production unit comprises an alkaline hydrogen production module, a solid oxide hydrogen production module and a PEM hydrogen production module.

10. A control method for the renewable energy hydrogen production system according to any one of claims 5 to 9, comprising:

    determining a system operating mode according to a type of a unidirectional power flow unit and/or a bidirectional power flow unit external to the system;
    when the system operating mode is a renewable energy based grid-connected mode: controlling a power path direction of the isolation circuit to implement a direction of power from a single type of renewable energy power generation unit to a unidirectional power flow unit of an alternating-current or direct-current bus;
    when the system operating mode is an energy storage based grid-connected charging/discharging mode: controlling a power path direction of the isolation circuit to implement the direction of the power from a single type of energy storage unit to a bidirectional power flow unit of the alternating-current or direct-current bus; and
    when the system operating mode is a grid-connected based hydrogen production mode: controlling a power path direction of the isolation circuit to implement the direction of the power from the alternating-current or direct-current bus to a single type of hydrogen production unit.

11. The control method for the renewable energy hydrogen production system according to claim 10, further comprising:

    when the system operating mode is a renewable energy hybrid grid-connected mode: controlling a power path direction of the isolation circuit to implement the direction of the power from multiple types of renewable energy power generation units to the unidirectional power flow unit of the alternating-current or direct-current bus;
    when the system operating mode is an energy storage hybrid grid-connected charging/discharging mode: controlling a power path direction of the isolation circuit to implement the direction of the power from multiple types of energy storage units to the bidirectional power flow unit of the alternating-current or direct-current bus; and
    when the system operating mode is a grid-connected hybrid hydrogen production mode: controlling a power path direction of the isolation circuit to implement the direction of the power from the alternating-current or direct-current bus to multiple types of hydrogen production units.

FIG. 1

100

Wind/ Solar — Uni. parallel — DC-AC

Energy Storage — Bi. distributed — DC-AC

AC-DC

Alkaline electrolysis — Uni. parallel — DC-AC

PEM electrolysis — Uni. parallel — DC-AC

SB-A,B,C1

SB-A,B,Cn

AC reference

+ DC POS

- DC NEG

FIG. 2

100

Grid

Wind/Solar — Uni. parallel — DC-AC

Alkaline electrolysis — Uni. parallel — DC-AC

PEM electrolysis — Uni. parallel — DC-AC

AC-DC

Energy Storage — DC-DC

SB-A, B, C1

SB-A, B, Cn

DC reference

FIG. 3

13

FIG. 4

FIG. 5

FIG. 6

FIG. 7

FIG. 8

determining a system operating mode according to a type of a unidirectional power flow unit and/or a bidirectional power flow unit external to the system — S100

when the system operating mode is a renewable energy based grid connected mode: controlling a power path direction of an isolation circuit to implement a direction of power from a single type of renewable energy power generation unit to a unidirectional power flow unit of an alternating-current or direct-current bus — S211

when the system operating mode is a renewable energy hybrid grid-connected mode: controlling a power path direction of the isolation circuit to implement the direction of the power from multiple types of renewable energy power generation units to the unidirectional power flow unit of the alternating-current or direct-current bus — S221

when the system operating mode is an energy storage based grid connected charging/discharging mode: controlling a power path direction of the isolation circuit to implement the direction of the power from a single type of energy storage unit to a bidirectional power flow unit of the alternating-current or direct-current bus — S212

when the system operating mode is an energy storage hybrid grid-connected charging/discharging mode: controlling a power path direction of the isolation circuit to implement the direction of the power from multiple types of energy storage units to the bidirectional power flow unit of the alternating-current or direct-current bus — S222

when the system operating mode is a grid-connected based hydrogen production mode: controlling a power path direction of the isolation circuit to implement the direction of the power from the alternating-current or direct-current bus to a single type of hydrogen production unit — S213

when the system operating mode is a grid-connected hybrid hydrogen production mode: controlling a power path direction of the isolation circuit to implement the direction of the power from the alternating-current or direct-current bus to multiple types of hydrogen production units — S223

FIG. 9

## INTERNATIONAL SEARCH REPORT

| International application No. |
| --- |
| **PCT/CN2023/136588** |

| A. CLASSIFICATION OF SUBJECT MATTER |
| --- |
| H02M3/335(2006.01)i |
| According to International Patent Classification (IPC) or to both national classification and IPC |

| B. FIELDS SEARCHED |
| --- |
| Minimum documentation searched (classification system followed by classification symbols) |
| IPC:H02M |
| Documentation searched other than minimum documentation to the extent that such documents are included in the fields searched |
| Electronic data base consulted during the international search (name of data base and, where practicable, search terms used) |
| CNTXT: CNABS; ENTXT; ENTXTC; CJFD: 新能源, 可再生, 光伏, 风, 储能, 电池, 制氢, 电解, 碱性, 质子交换膜, 单向, 双向, 并网, PEM, DC/DC, DC/AC, PV, storage, battery, electrolytic, hydrogen, renewable energy generation |

| C. DOCUMENTS CONSIDERED TO BE RELEVANT | | |
| --- | --- | --- |
| Category* | Citation of document, with indication, where appropriate, of the relevant passages | Relevant to claim No. |
| X | CN 115882515 A (HARBIN INSTITUTE OF TECHNOLOGY (SHENZHEN) (SHENZHEN INSTITUTE OF SCIENCE AND TECHNOLOGY INNOVATION, HARBIN INSTITUTE OF TECHNOLOGY)) 31 March 2023 (2023-03-31) description, paragraphs 21-30, and figure 1 | 1-11 |
| A | CN 112260260 A (NANJING ECAR ELECTRICAL TECHNOLOGY CO., LTD. et al.) 22 January 2021 (2021-01-22) entire document | 1-11 |
| A | CN 113036811 A (POWERCHINA HEBEI ELECTRIC POWER ENGINEERING CO., LTD.) 25 June 2021 (2021-06-25) entire document | 1-11 |
| A | CN 113629777 A (DALIAN UNIVERSITY OF TECHNOLOGY et al.) 09 November 2021 (2021-11-09) entire document | 1-11 |
| A | CN 114744626 A (ZHEJIANG UNIVERSITY et al.) 12 July 2022 (2022-07-12) entire document | 1-11 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 May 2024** | **22 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

<table>
<tr><td colspan="3">International application No.<br><br>**PCT/CN2023/136588**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | US 2023041986 A1 (SUNGROW POWER SUPPLY CO., LTD.) 09 February 2023 (2023-02-09)<br>    entire document | 1-11 |

Form PCT/ISA/210 (second sheet) (July 2022)

**INTERNATIONAL SEARCH REPORT**
Information on patent family members

| International application No. |
| --- |
| **PCT/CN2023/136588** |

| Patent document cited in search report | | | Publication date (day/month/year) | Patent family member(s) | | | Publication date (day/month/year) |
| --- | --- | --- | --- | --- | --- | --- | --- |
| CN | 115882515 | A | 31 March 2023 | CN | 115882515 | B | 26 May 2023 |
| CN | 112260260 | A | 22 January 2021 | | None | | |
| CN | 113036811 | A | 25 June 2021 | | None | | |
| CN | 113629777 | A | 09 November 2021 | | None | | |
| CN | 114744626 | A | 12 July 2022 | | None | | |
| US | 2023041986 | A1 | 09 February 2023 | WO | 2021248946 | A1 | 16 December 2021 |
| | | | | EP | 4167421 | A1 | 19 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311279554